Europäisches Patentamt

European Patent Office

Office européen des brevets

(11) Veröffentlichungsnummer: **0 320 566 B1**

---

(12) **EUROPÄISCHE PATENTSCHRIFT**

(45) Veröffentlichungstag der Patentschrift: **30.10.91**

(51) Int. Cl.⁵: **G01P 1/00, F16B 19/02**

(21) Anmeldenummer: **88111799.8**

(22) Anmeldetag: **22.07.88**

(54) **Messeinrichtung.**

(30) Priorität: **15.12.87 DE 3742393**

(43) Veröffentlichungstag der Anmeldung:
**21.06.89 Patentblatt 89/25**

(45) Bekanntmachung des Hinweises auf die
Patenterteilung:
**30.10.91 Patentblatt 91/44**

(84) Benannte Vertragsstaaten:
**DE ES FR GB IT NL**

(56) Entgegenhaltungen:
**GB-A- 2 114 699**
**GB-A- 2 144 224**
**GB-A- 2 191 295**

(73) Patentinhaber: **VDO Adolf Schindling AG**
**Gräfstrasse 103**
**W-6000 Frankfurt/Main 90(DE)**

(72) Erfinder: **Welter, Horst**
**Jenaer Strasse 12**
**W-6307 Linden(DE)**
Erfinder: **Scholz, Rolf**
**Brüder-Grimm-Strasse 7**
**W-6457 Maintal 1(DE)**

(74) Vertreter: **Klein, Thomas, Dipl.-Ing. (FH)**
**Sodener Strasse 9 Postfach 6140**
**W-6231 Schwalbach a. Ts.(DE)**

## Beschreibung

Die Erfindung bezieht sich auf eine Meßeinrichtung zur Erfassung der Umfangsgeschwindigkeit einer in Drehung versetzbaren Zahnscheibe mit einem in einem definierten Abstand zum Zahnkranz der Zahnscheibe angeordneten Meßfühler, welcher axial verschiebbar und in einer einjustierbaren Stellung auf einer Traghäulse radial klemmend festsetzbar ist, die mit einer Befestigungsschraube auf einem den Meßfühler tragenden Tragkörper befestigt ist. Meßeinrichtungen dieser Art werden beispielsweise als Drehgeschwindigkeitssensoren an den einzelnen Rädern eines mit einem Antiblokkiersystem ausgerüsteten Kraftfahrzeugs eingesetzt und sind allgemein bekannt.

Bei solchen, aus DE-A-3327 400 bekannten Meßeinrichtungen ist es erforderlich, daß der Abstand zwischen dem Meßfühler und dem Zahnkranz des Zahnrades sehr genau einjustiert wird. Hierzu läßt sich bei der bekannten Meßeinrichtung der Meßfühler auch dann noch auf der Traghülse verschieben, wenn diese mittels einer durch sie hindurchgeführten Befestigungsschraube gegen den den Meßfühler tragenden Tragkörper geschraubt ist. Ist der richtige Abstand zum Zahnkranz gefunden, dann wird eine quer zur Traghülse angeordnete Klemmschraube angezogen, welche dadurch gegen die Traghülse drückt und dadurch den Meßfühler relativ zur Traghülse fixiert. Wird die Meßeinrichtung demontiert, so braucht man die Klemmschraube nicht zu lösen. Dadurch bleibt die einmal gefundene Einstellung des Meßfühlers erhalten.

Nachteilig bei der bekannten Meßeinrichtung ist, daß zu ihrer erstmaligen Montage stets zwei Schrauben angezogen werden müssen. Das macht es erforderlich, daß diese beiden Schrauben mit einem Schraubwerkzeug erreichbar sind und der Platz ausreicht, um die Schrauben festzuziehen. Meßeinrichtungen dieser Art sind jedoch notwendigerweise im Kraftfahrzeug in einem Bereich angeordnet, wo sehr beengte Platzverhältnisse herrschen. Abgesehen von diesem Erfordernis der Zugänglichkeit der Meßeinrichtung von zwei Seiten ist es bei der bekannten Meßeinrichtung nachteilig, daß die Traghülse verhältnismäßig kompliziert gestaltet sein muß, damit sie die durch sie hindurchgeführte Befestigungsschraube und die quer dazu in sie hineinführende Klemmschraube aufnehmen kann.

GB-A-2 191 95 offenbart eine Meßeinrichtung, bei der mittels einer Ringklemmanordnung ein Montieren und fustieren des Meßfühlers mittels einer einzigen Schraube erfolgt. Eine bleibende Fixierung des Meßfühlers auf der Traghülse ist nicht offenbart.

Der Erfindung liegt die Aufgabe zugrunde, eine Meßeinrichtung der eingangs genannten Art, bei der eine einmal gefundene Einstellung bei einer Demontage nicht verlorengeht, derart zu gestalten, daß zur Meßfühlerjustage und Befestigung insgesamt nur noch eine einzige Schraube erforderlich ist.

Diese Aufgabe wird erfindungsgemäß dadurch gelöst, daß die Traghülse als mittels der Befestigungsschraube in eine bleibende Spreizstellung verformbare Spreizhülse ausgebildet ist.

Durch diese Gestaltung kann man den Meßfühler auf der Traghülse zum Zwecke der Montage solange verschieben, bis die durch die Traghülse geführte Befestigungsschraube festgezogen ist. Durch die Ausbildung der Traghülse als Spreizhülse erfolgen das Fixieren des Meßfühlers auf der Traghülse und die Befestigung der Traghülse auf dem Tragkörper allein durch die Befestigungsschraube. Die Fixierung des Meßfühlers auf der Traghülse geht auch nach dem Lösen der Befestigungsschraube nicht verloren, da die Spreizhülse durch die Spreizmittel in eine bleibende Spreizstellung gelangt.

Eine konstruktiv sehr einfache Ausführungsform der Traghülse als Spreizhülse besteht darin, daß die Traghülse aus zwei ineinanderschiebbaren Hülsenteilen besteht und zumindest ein Hülsenteil einen in den anderen Hülsenteil einschiebbaren, konischen Endbereich aufweist.

Die Traghülse wird mit einer scharfen Kante in die Wandung der Gehäusebohrung des Gehäuses des Meßfühlers eingedrückt, so daß eine formschlüssige Fixierung in axialer Richtung erfolgt, wenn gemäß einer vorteilhaften Ausgestaltung der Erfindung ein Hülsenteil den konischen Endbereich und der andere Hülsenteil eine diesen unter radialer Verformung aufnehmende, zylindrische Bohrung aufweist.

Ein genau festlegbarer Spreizweg läßt sich auf einfache Weise dadurch erzielen, daß die Eindringtiefe des konischen Endbereiches in die Bohrung durch eine Schulter der Bohrung begrenzt ist. Bei einer solchen Ausführungsform kann man die Befestigungsschraube stets so fest anziehen, bis die beiden Hülsenteile formschlüssig aufeinanderstehen. Die durch weiteres Festziehen der Befestigungsschraube anschließend noch aufgebrachte Spannkraft erhöht ausschließlich die Haltekräfte der Traghülse auf dem Tragkörper. Ein zu starkes Spreizen des Tragkörpers, was zu einer Zerstörung des Gehäuses des Meßfühlers führen könnte, ist somit bei dieser Ausführungsform ausgeschlossen.

Wenn das Gehäuse des Meßfühlers aus Kunststoff gefertigt ist, dann ist es vorteilhaft, wenn die Traghülse innerhalb einer axial unverschieblich im Gehäuse des Meßfühlers angeordneten Führungshülse angeordnet ist.

Eine andere, sehr vorteilhafte Ausgestaltung der Erfindung besteht darin, daß die Traghülse auch nach oben hin aus dem Gehäuse des Meßfühlers ragt. Hierdurch wird zunächst einmal sichergestellt, daß die Befestigungsschraube mit ihrem Kopf ausschließlich auf der Traghülse aufsitzt und nicht in unzulässiger Weise das Gehäuse des Meßfühlers kraftbeaufschlagt. Weiterhin ergibt sich bei einer solchen Ausführungsform die Möglichkeit, die Traghülse zum Zwecke des Transportes des Meßfühlers in ihrer im Gehäuse des Meßfühlers eingeschobenen Position zu sichern, damit sie nicht verlorengehen kann.

Besonders günstig ist es, wenn die Traghülse zum Zwecke des Transportes des Meßfühlers mittels einer als Bügel ausgebildeten Transportsicherung im Gehäuse des Meßfühlers gehalten ist.

Der Bügel ist besonders einfach gestaltet und gut zu handhaben, wenn er an seinen beiden Enden jeweils eine maulartige Aufnahme zum zumindest teilweisen Umgreifen des aus dem Gehäuse ragenden Endbereiches der Traghülse aufweist.

Bei der Vormontage der Traghülse kann ein seitenrichtiges Einsetzen der Traghülse in die Bohrung des Meßfühlers sichergestellt werden, wenn gemäß einer Weiterbildung der Erfindung die Traghülse in einem aus dem Gehäuse ragenden Endbereich zur Fixierung der Aufnahme des Bügels der Transportsicherung eine umlaufende Nut hat.

Die Erfindung läßt zahlreiche Ausführungsformen zu. Zur weiteren Verdeutlichung ihres Grundgedankens ist eine davon in der Zeichnung dargestellt und wird nachfolgend beschrieben. In ihr zeigen

Fig. 1    eine teilweise geschnittene Seitenansicht einer Meßeinrichtung nach der Erfindung,

Fig. 2    einen Längsschnitt durch ein oberes Hülsenteil einer Traghülse der Meßeinrichtung,

Fig. 3    einen Längsschnitt durch ein unteres Hülsenteil einer Traghülse der Meßeinrichtung,

Fig. 4    die komplette Traghülse mit einer Transportsicherung,

Fig. 5    eine Ansicht der Transportsicherung.

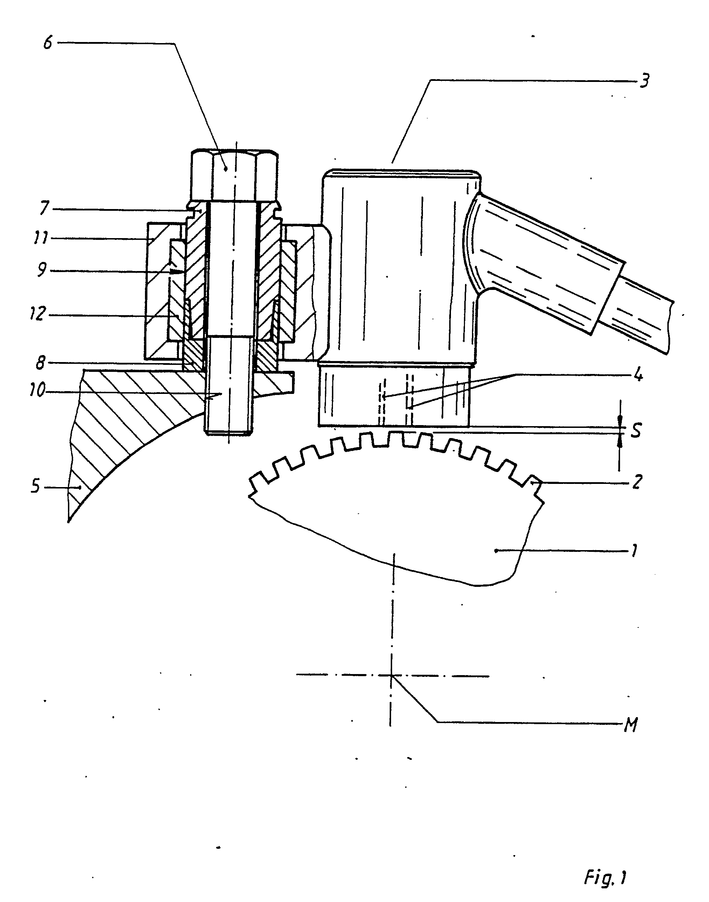

In Figur 1 ist der obere Bereich einer Zahnscheibe 1 gezeigt, welche um einen Mittelpunkt M in Drehung versetzbar ist. Der Außenumfang der Zahnscheibe 1 ist mit einem Zahnkranz 2 versehen. Zur Erfassung der Umfangsgeschwindigkeit der Zahnscheibe 1 dient ein Meßfühler 3, welcher mit Polschuhen 4 in einem genau einzustellenden Abstand S vom Zahnrad 1 angeordnet ist.

Im linken Bildteil der Figur 1 ist ein Endbereich eines Tragkörpers 5 gezeigt, auf dem der Meßfühler 3 mittels einer Befestigungsschraube 6 befestigt ist. Diese Befestigungsschraube 6 ist durch eine aus zwei ineinandergesteckten Hülsenteilen 7, 8 bestehende Traghülse 9 geführt und in ein Gewindeloch 10 des Tragkörpers 5 geschraubt. Diese Traghülse 9 ragt nach oben und unten aus dem Meßfühler 3. Wichtig für die Erfindung ist, daß die Traghülse 9 als Spreizhülse ausgebildet ist, welche sich in radialer Richtung bleibend spreizt, wenn man die Befestigungsschraube 6 anzieht. Vor dem Festziehen der Befestigungsschraube 6 ist der Meßfühler 3 auf der Traghülse 9 in axialer Richtung verschiebbar, so daß der Abstand S eingestellt werden kann.

Zur Ermöglichung einer leichten Verschiebbarkeit des Meßfühlers 3 auf der Traghülse 9 vor dem festen Anziehen der Befestigungsschraube 6 hat der Meßfühler 3 in einem Gehäuse 11 eine Führungshülse 12 aus Metall, die fest im Gehäuse 11 angeordnet ist. Beim Verstellen gleitet deshalb der Meßfühler 3 mit seiner Führungshülse 12 auf der Traghülse 9.

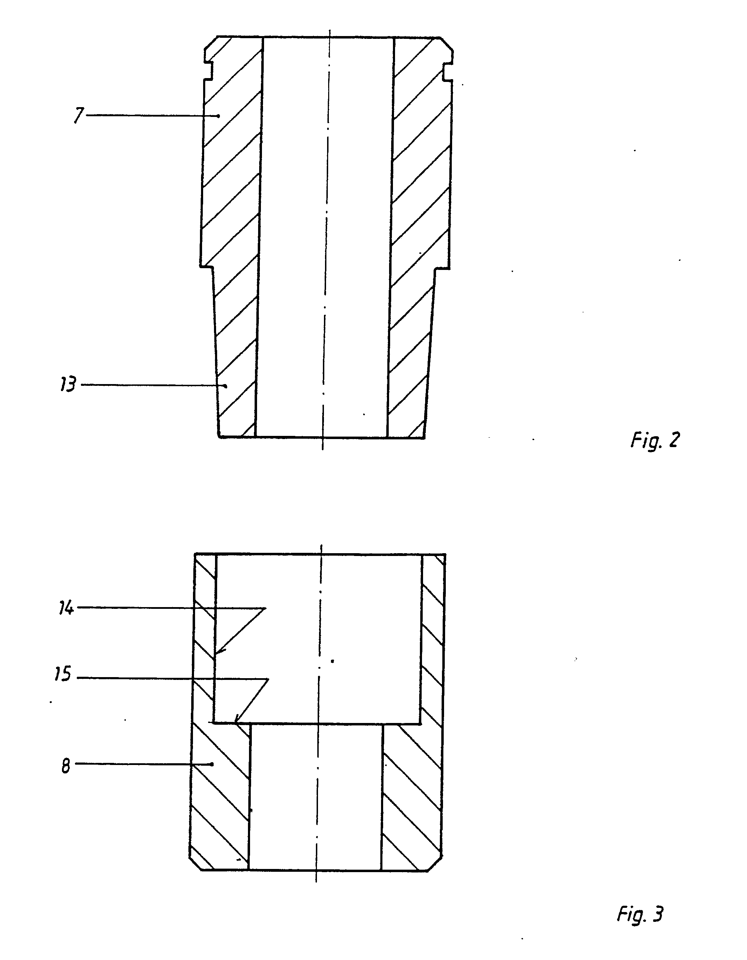

Die Figur 2 zeigt das obere Hülsenteil 7 der Traghülse 9. Zu sehen ist, daß dieses Hülsenteil 7 nach unten hin einen nach unten hin sich verjüngenden, konischen Endbereich 13 hat. Dieser konische Endbereich 13 ist in eine zylindrische Bohrung 14 des in Figur 3 gezeigten unteren Hülsenteils 8 einschiebbar, wobei der Innendurchmesser dieser Bohrung 14 so bemessen ist, daß dieses Hülsenteil 8 beim Einschieben des Endbereiches in die Bohrung 14 geringfügig aufgeweitet wird, wodurch die angestrebte Spreizwirkung besteht. Die Bohrung 14 wird durch eine Schulter 15 begrenzt, auf die der Endbereich 13 sich mit seiner Stirnfläche aufzusetzen vermag, wenn er vollständig in die Bohrung 14 eingetrieben ist.

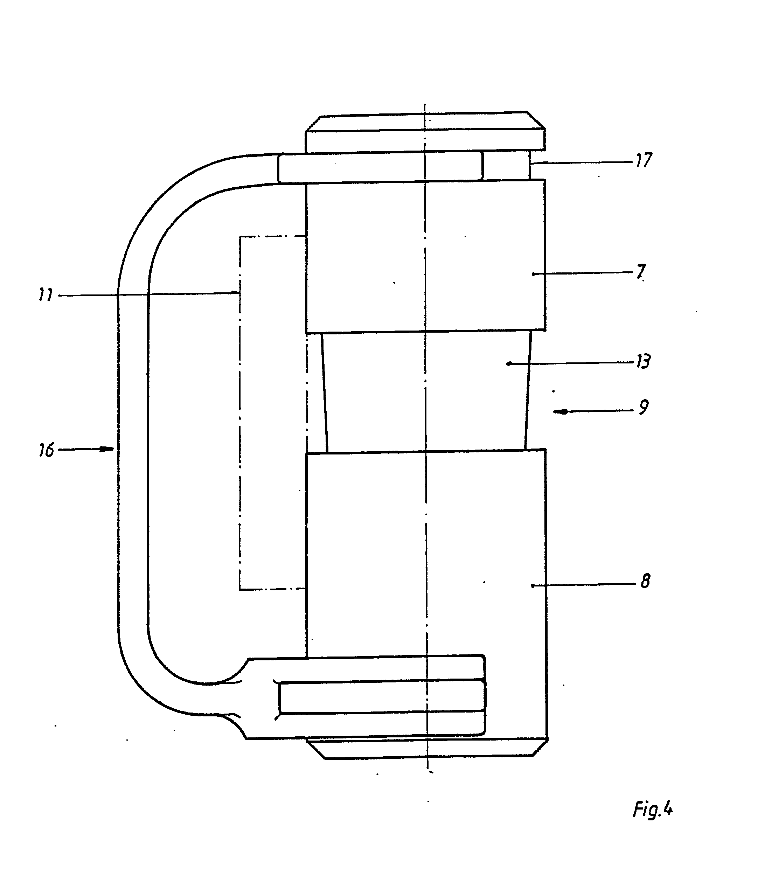

Die Figur 4 zeigt die ineinandergesteckten Hülsenteile 7, 8 der Traghülse 9 zusammen mit einer Transportsicherung 16. Diese greift einerseits in eine umlaufende Nut 17 des Hülsenteils 7, andererseits über einen Teilbereich der Mantelfläche des unteren Hülsenteils 8. Strichpunktiert ist in Figur 4 ein Teilbereich des Gehäuses 11 dargestellt. Zu erkennen ist, daß durch die aufgesetzte Transportsicherung 16 die Traghülse 9 nicht aus dem Gehäuse 11 herausfallen kann.

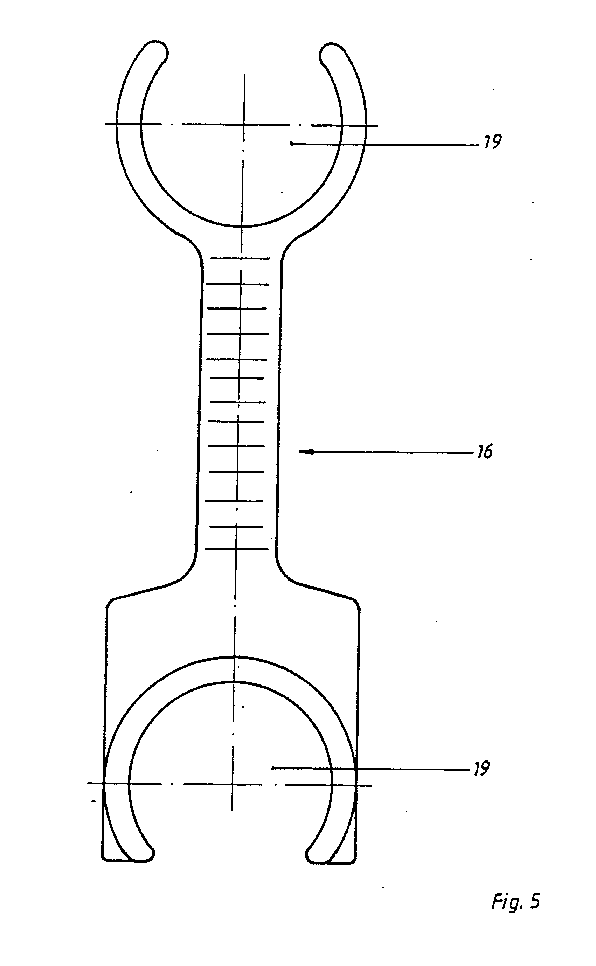

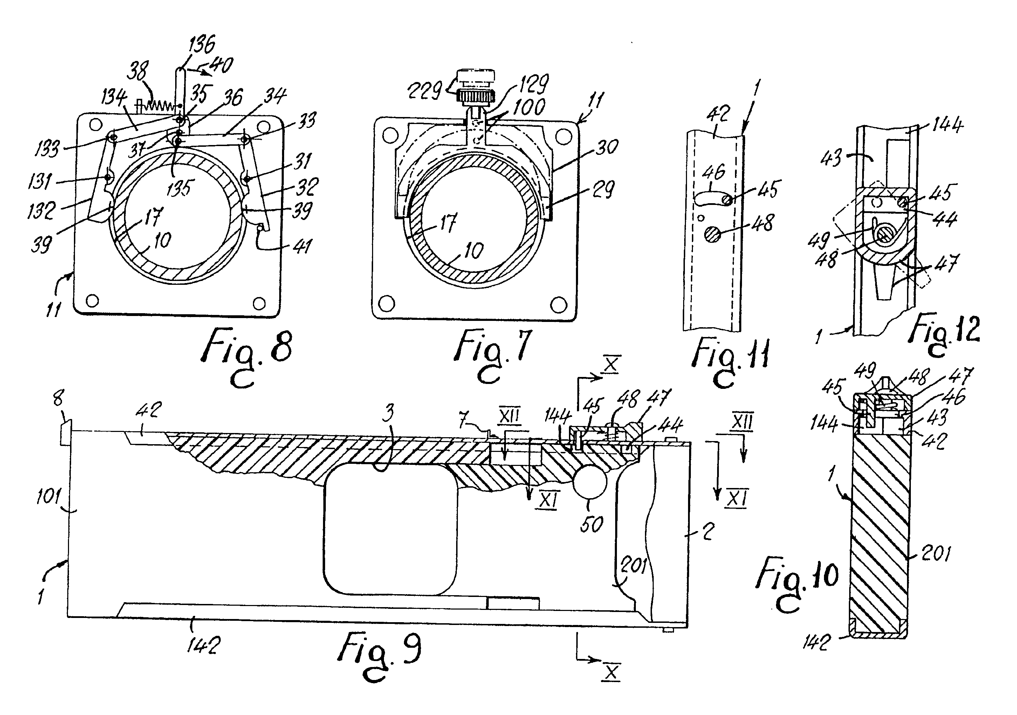

Der Figur 5 ist zu entnehmen, daß die Transportsicherung 16 als Bügel ausgebildet ist, der an seinen beiden Enden jeweils eine maulartige Aufnahme 18, 19 hat, mit der er über die Traghülse 9 bzw. in die Nut 17 der Traghülse 9 zu greifen vermag.

**Patentansprüche**

1.  Meßeinrichtung zur Erfassung der Umfangsgeschwindigkeit einer in Drehung versetzbaren Zahnscheibe (1) mit einem in einem definierten Abstand zum Zahnkranz (2) der Zahnscheibe (1) angeordneten Meßfühler, welcher axial verschiebbar und in einer einjustierbaren Stellung auf einer Traghülse (9) radial klemmend festsetzbar ist, die mit einer Befestigungsschraube (6) auf einem den Meßfühler tragenden Tragkörper (5) befestig ist, dadurch gekennzeichnet, daß die Traghülse (9) als mittels der Befestigungsschraube (6) in eine bleibende Spreizstellung verformbare Spreizhülse ausgebildet ist.

2. Meßeinrichtung nach Anspruch 1, dadurch gekennzeichnet, daß die Traghülse (9) aus zwei ineinanderschiebbaren Hülsenteilen (7, 8) besteht und zumindest ein Hülsenteil (7) einen in den anderen Hülsenteil (8) einschiebbaren, konischen Endbereich (13) aufweist.

3. Meßeinrichtung nach Anspruch 2, dadurch gekennzeichnet, daß ein Hülsenteil (7) den konischen Endbereich (13) und der andere Hülsenteil (8) eine diesen unter radialer Verformung aufnehmende, zylindrische Bohrung (14) aufweist.

4. Meßeinrichtung nach Anspruch 3, dadurch gekennzeichnet, daß die Eindringtiefe des konischen Endbereiches (13) in die Bohrung (14) durch eine Schulter (15) der Bohrung (14) begrenzt ist.

5. Meßeinrichtung nach einem oder mehreren der vorangehenden Ansprüche, dadurch gekennzeichnet, daß die Traghülse (9) innerhalb einer axial unverschieblich im Gehäuse (11) des Meßfühlers (3) angeordneten Führungshülse (12) angeordnet ist.

6. Meßeinrichtung nach einem oder mehreren der vorangehenden Ansprüche, dadurch gekennzeichnet, daß die Traghülse (9) auch nach oben hin aus dem Gehäuse (11) des Meßfühlers (3) ragt.

7. Meßeinrichtung nach einem oder mehreren der vorangehenden Ansprüche, dadurch gekennzeichnet, daß die Traghülse (9) zum Zwecke des Transportes des Meßfühlers (3) mittels einer als Bügel ausgebildeten Transportsicherung (16) im Gehäuse (11) des Meßfühlers (3) gehalten ist.

8. Meßeinrichtung nach Anspruch 7, dadurch gekennzeichnet, daß der Bügel an seinen beiden Enden jeweils eine maulartige Aufnahme (18, 19) zum zumindest teilweisen Umgreifen des aus dem Gehäuse (11) ragenden Endbereiches der Traghülse (9) aufweist.

9. Meßeinrichtung nach Anspruch 7, dadurch gekennzeichnet, daß die Traghülse (9) in einem aus dem Gehäuse (11) ragenden Endbereich zur Fixierung der Aufnahme (18) des Bügels der Transportsicherung (16) eine umlaufende Nut (17) hat.

**Claims**

1. Measuring device for recording the peripheral speed of a rotatable toothed disc (1) with a sensor arranged a defined distance from the toothed rim (2) of said disc (1), the said sensor being axially movable and radially clampable in a finely adjustable position on a carrying sleeve (9) secured by a fixing screw (6) to a carrying body (5) bearing the sensor, characterised in that the carrying sleeve (9) is in the form or an expanding sleeve which can be deformed into a permanent splayed position by means of the fixing screw (6).

2. Measuring device according to claim 1, characterised in that the carrying sleeve (9) consists of two telescoping sleeve parts (7, 8), and at least one sleeve part (7) has a conical end portion (13) which can be slid into the other sleeve part (8).

3. Measuring device according to claim 2, characterised in that one sleeve part (7) incorporates the conical end portion (13) and the other sleeve part (8) a cylindrical hole (14) which receives said end portion (13) accompanied by radial deformation.

4. Measuring device according to claim 3, characterised in that the depth of penetration of the conical end portion (13) into the hole (14) is limited by a shoulder (15) on the hole (14).

5. Measuring device according to one or more of the preceding claims, characterised in that the carrying sleeve (9) is arranged inside a guide sleeve (12) arranged so as to be axially immovable in the casing (11) of the sensor (3).

6. Measuring device according to one or more of the preceding claims, characterised in that the carrying sleeve (9) also projects upwards out of the casing (11) of the sensor (3).

7. Measuring device according to one or more of the preceding claims, characterised in that in order to transport the sensor (3), the carrying sleeve (9) is held by a stirrup-shaped transport locking member (16) in the casing (11) of the sensor (3).

8. Measuring device according to claim 7, characterised in that at each of its two ends the stirrup has a jaw-like locator (18, 19) for at least partially gripping around the end portion of the carrying sleeve (9) projecting from the casing (11).

9. Measuring device according to claim 7, characterised in that to fasten the locator (18) on the stirrup of the transport locking member (16), the carrying sleeve (9) incorporates a peripheral groove (17) in an end portion projecting from the casing (11).

**Revendications**

1. Dispositif de mesure destiné à déceler ou à capter la vitesse périphérique d'une roue dentée (1), susceptible d'être mise en rotation, au moyen d'un capteur de mesure disposé avec un écart défini par rapport à la couronne (2) de dents sur la roue dentée (1), lequel dispositif peut être déplacé axialement et peut être fixé de façon bloquée radialement dans une position susceptible d'être réglée, sur un manchon (9) de support qui peut être fixé, au moyen d'une vis (6) de fixation, sur un corps de support (5) qui porte le capteur de mesure, dispositif caractérisé en ce que le manchon (9) de support a une conformation de manchon expansible susceptible d'être déformé, au moyen de la vis (6) de fixation, pour atteindre un état d'expansion permanent.

2. Dispositif de mesure selon la revendication 1, caractérisé en ce que le manchon (9) de support est constitué par deux parties (7, 8) de manchon susceptibles d'être enfilées l'une dans l'autre, et en ce qu'au moins une partie (7) de manchon présente une zone (13) d'extrémité conique susceptible d'être enfilée dans l'autre partie (8) de manchon.

3. Dispositif de mesure selon la revendication 2, caractérisé en ce qu'une partie (7) de manchon présente la zone (13) d'extrémité conique et l'autre partie (8) de manchon présente un alésage (14) cylindrique, qui reçoit celle-ci en se déformant radialement.

4. Dispositif de mesure selon la revendication 3, caractérisé en ce que la profondeur de pénétration de la zone (13) d'extrémité conique dans l'alésage (14) est limitée par un épaulement (15) de l'alésage (14).

5. Dispositif de mesure selon une ou plusieurs des revendications précédentes, caractérisé en ce que le manchon (9) de support est disposé à l'intérieur d'un manchon (12) de guidage disposé de façon à ne pas pouvoir se déplacer axialement dans le corps (11) du capteur (3) de mesure.

6. Dispositif de mesure selon une ou plusieurs des revendications précédentes, caractérisé en ce que le manchon (9) de support dépasse également vers le haut à partir du corps (11) du capteur (3) de mesure.

7. Dispositif de mesure selon une ou plusieurs des revendications précédentes, caractérisé en ce que, en vue du transport du capteur (3) de mesure, le manchon (9) de support est maintenu dans le corps (11) du capteur (3) de mesure au moyen d'un élément (16) de fixation en forme d'étrier destiné à assurer la sécurité du transport.

8. Dispositif de mesure selon la revendication 7, caractérisé en ce que l'étrier présente à chacune de ses deux extrémités un logement (18, 19) en forme de gueule, en vue de saisir en l'entourant au moins partiellement la zone d'extrémité du manchon (9) de support, qui dépasse du corps (11).

9. Dispositif de mesure selon la revendication 7, caractérisé en ce que le manchon (9) de support comporte une rainure (17) périphérique,destinée à fixer la position du logement (18) de l'étrier de l'élément (16) de fixation pour la sécurité du transport, dans une zone d'extrémité faisant saillie hors du carter (11).

Fig. 1

7

Fig. 2

Fig. 3

Fig.4

Fig. 5

Fig. 8

Fig. 7

Fig. 11

Fig. 12

Fig. 9

Fig. 10

EP 0 321 766 B1